(19) Europäisches Patentamt
European Patent Office
Office européen des brevets

(11) Veröffentlichungsnummer: **0 253 985 B1**

(12) **EUROPÄISCHE PATENTSCHRIFT**

(45) Veröffentlichungstag der Patentschrift: **27.12.91**

(51) Int. Cl.[5]: **C08L 27/06**, C08K 5/10, C08K 5/13, C08K 5/37, //(C08L27/06,79:02)

(21) Anmeldenummer: **87107329.2**

(22) Anmeldetag: **20.05.87**

# (54) Stabilisierte Formmassen auf der Basis von Polyvinylchlorid oder Vinylchlorid-Copolymerisaten und Stabilisatorsystem.

(30) Priorität: **17.07.86 DE 3624079**

(43) Veröffentlichungstag der Anmeldung: **27.01.88 Patentblatt 88/04**

(45) Bekanntmachung des Hinweises auf die Patenterteilung: **27.12.91 Patentblatt 91/52**

(84) Benannte Vertragsstaaten: **BE DE FR GB IT LU NL SE**

(56) Entgegenhaltungen:
**EP-A- 0 070 092**
**EP-A- 0 152 551**

(73) Patentinhaber: **HÜLS AKTIENGESELLSCHAFT**
**Patentabteilung / PB 15 - Postfach 13 20**
**W-4370 Marl 1(DE)**

(72) Erfinder: **Kemper, Bruno, Dr.**
**Haardweg 4**
**W-4358 Haltern(DE)**
Erfinder: **Bieringer, Heimo, Dr.**
**Lohened 20**
**A-4880 St. Georgen(AT)**

EP 0 253 985 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Chlorhaltige Polymerisate, insbesondere Polyvinylchlorid, erleiden bekanntlich unter der Einwirkung von Wärme, z. B. bei der Verarbeitung, einen Abbau, der Verfärbungen und eine Beeinträchtigung der mechanischen Eigenschaften verursacht. Daher müssen solchen Polymerisaten vor der Verarbeitung Stabilisatoren zugesetzt werden. Als Stabilisatoren für Polyvinylchlorid kommen im wesentlichen Organozinnverbindungen, organische und anorganische Bleisalze, organische Antimonverbindungen oder Kombinationen aus Cadmium- und Bariumcarboxylaten bzw. Zink- und Calciumcarboxylaten zur Anwendung. Diesen sogenannten Primärstabilisatoren werden häufig zur Verbesserung ihrer Wirksamkeit Costabilisatoren zugesetzt. Die Wirkungsweise von Primär- oder Costabilisatoren bzw. ihr Zusammenwirken (Synergismus) ist in der einschlägigen Literatur beschrieben, z. B. in der Publikation von L. I. Nass, "Heat Stabilizers" in Kirk Othmer, Encyclopedia of Chemical Technology, Vol. 12, 3. Edition, Seite 225, Verlag John Wiley and Sons, 1980.

Die Wirksamkeit der beschriebenen Stabilisatoren ist für die meisten Anwendungszwecke ausreichend, doch unterliegt ihr Einsatz einigen wesentlichen Beschränkungen. So sind Blei-, Antimon- und Cadmiumstabilisatoren aufgrund ihrer Toxizität nicht in allen Bereichen einsetzbar, besonders nicht in Verpackungsmaterialien für Nahrungsmittel oder im medizinischen Sektor. Organozinnverbindungen, von denen einige toxikologisch unbedenklich sind, eignen sich nicht für eine breite Anwendung, da sie vergleichsweise teuer bzw. schwer zugänglich sind.

Mit einer physiologisch einwandfreien Stabilisatorkombination, bestehend aus Zink- und Calciumcarboxylaten, wie sie in der US-PS 2 446 976 beschrieben wird, ist dagegen nur eine unzureichende Stabilisierung erreichbar (siehe Tabelle A, Beispiel 2).

Aus diesem Grunde werden Zink- und Calciumcarboxylaten Costabilisatoren zugesetzt, wie Epoxyverbindungen, Polyole, organische Phosphite, substituierte Dihydropyridine, 1,3-Diketone oder aber auch Kombinationen aus diesen Verbindungen. Alle diese Stabilisatorkombinationen sind in ihrer Wirkung jedoch noch nicht ausreichend, da die Langzeitstabilität der so stabiliserten Formmassen unbefriedigend ausfällt und/oder die Anfangsfarbe mäßig oder schlecht ist. Insbesondere Anfangsfarbe und Transparenz der Polymermassen werden durch den für die Langzeitstabilität erforderlichen hohen Gehalt an Calciumcarboxylaten sehr stark beeinträchtigt.

Diese Nachteile des Standes der Technik wurden überwunden durch die Bereitstellung von stabilisierten Formmassen auf der Basis von Polyvinylchlorid oder Vinylchlorid-Copolymerisaten, enthaltend ein Stabilisatorsystem aus wenigstens einer Zinkverbindung und wenigstens einem Costabilisator, das gekennzeichnet ist durch einen Gehalt an einer oder mehreren Verbindungen des Zinks der Formel

I $R^1O - Zn - OR^2$,

in der $R^1$ und $R^2$ gleich oder verschieden sein können und für geradkettige oder verzweigte, gegebenenfalls mit Hydroxylgruppen substituierte aliphatische Acylgruppen mit 8 bis 21 C-Atomen oder für gegebenenfalls mit Alkylgruppen von 1 bis 22 C-Atomen substituierte aromatische Acylgruppen oder für gegebenenfalls mit Alkylgruppen von 1 bis 22 C-Atomen substituierte Arylgruppen stehen, und/oder einer oder mehreren Verbindungen des Zinks der Formel

II $R^3S - Zn - SR^4$,

in der $R^3$ und $R^4$ gleich oder verschieden sein können und für geradkettige oder verzweigte Alkylgruppen mit 6 bis 22 C-Atomen oder für gegebenenfalls mit Alkylgruppen von 1 bis 22 C-Atomen substituierte Arylgruppen oder für eine Gruppierung -X-CO-O-Y stehen, in der X eine Alkylengruppe $(CH_2)_m$ mit m = 1 bis 20, eine Phenylengruppe oder eine Alkylidengruppe -CHZ- bedeutet, in der Z eine geradkettige oder verzweigte Alkylgruppe mit 1 bis 22 C-Atomen oder eine Gruppierung $-CH_2-CO-O-Y$darstellt, und Y für eine geradkettige oder verzweigte Alkylgruppe mit 6 bis 22 C-Atomen steht, und/oder einer oder mehreren Verbindungen des Zinks der Formel

III $R^5O - Zn - SR^6$,

in der $R^5$ definiert ist wie $R^1$ bzw. $R^2$ in der Formel I und $R^6$ definiert ist wie $R^3$ bzw. $R^4$ in der Formel II, und einer oder mehreren Polyoxazolinen der Formel

IV 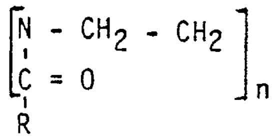

in der R, gegebenenfalls unterschiedliche, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 10 000 steht.

Die stabilisierten Formmassen enthalten die Verbindungen der Formel I und/oder II und/oder III insgesamt zweckmäßigerweise in Mengen von 0,02 bis 2,0, insbesondere 0,05 bis 1,0 Gewichtsprozent, bezogen auf Polymere.

Die stabilisierten Formmassen enthalten auch die Verbindungen der Formel IV zweckmäßigerweise in Mengen von 0,02 bis 2,0, insbesondere 0,05 bis 1,0 Gewichtsprozent, bezogen auf Polymere.

Besonders geeignet sind auch solche stabilisierten Formmassen, die Verbindungen der Formel I und/oder II und/oder III und die Verbindungen der Formel IV als Zusatz zu Primärstabilisatoren in Form von Verbindungen des Zinns, Bleis oder Antimons oder in Form von Kombinationen aus Cadmium-, Barium-, Calcium- und Zinkverbindungen enthalten.

Die Aufgabenstellung wird auch gelöst durch Bereitstellung eines Stabilisatorsystems zur Stabiliserung von Formmassen auf der Basis von Polyvinylchlorid oder Vinylchlorid-Copolymerisaten, bestehend aus einer oder mehreren Verbindungen des Zinks der Formel

I $R^1O - Zn - OR^2$,

in der $R^1$ und $R^2$ gleich oder verschieden sein können und für geradkettige oder verzweigte, gegebenenfalls mit Hydroxylgruppen substituierte, aliphatische Acylgruppen mit 8 bis 36 C-Atomen oder für gegebenenfalls mit Alkylgruppen von 1 bis 22 C-Atomen substituierte aromatische Acylgruppen oder für gegebenenfalls mit Alkylgruppen von 1 bis 22 C-Atomen substituierte Arylgruppen stehen, oder einer oder mehreren Verbindungen des Zinks der Formel

II $R^3S - Zn - SR^4$,

in der $R^3$ und $R^4$ gleich oder verschieden sein können und für geradkettige oder verzweigte Alkylgruppen mit 6 bis 22 C-Atomen oder für gegebenenfalls mit Alkylgruppen von 1 bis 22 C-Atomen substituierte Arylgruppen oder für eine Gruppierung -X-CO-O-Y stehen, in der X eine Alkylengruppe $(CH_2)_m$ mit $m = 1$ bis 20, eine Phenylengruppe oder eine Alkylidengruppe -CHZ- bedeutet, in der Z eine geradkettige oder verzweigte Alkylgruppe mit 1 bis 22 C-Atomen oder eine Gruppierung $-CH_2-CO-O-Y$darstellt, und Y für eine geradkettige oder verzweigte Alkylgruppe mit 6 bis 22 C-Atomen steht, und/oder einer oder mehreren Verbindungen des Zinks der Formel

III $R^5O - Zn - SR^3$,

in der $R^5$ definiert ist wie $R^1$ bzw. $R^2$ in der Formel I und $R^6$ definiert ist wie $R^3$ bzw. $R^4$ in der Formel II, und einer oder mehreren Polyoxazolinen der Formel

IV 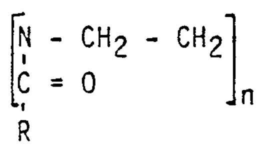

in der R, gegebenenfalls unterschiedliche, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 10 000 steht.

Das Stabilisatorsystem enthält die Zinkverbindung(en) und das Polyoxazolin vorzugsweise im Gewichtsverhältnis 1 : 10 bis 10 : 1, insbesondere im Gewichtsverhältnis 1 : 5 bis 5 : 1.

Solche bekannten Primärstabilisatoren und -Systeme sind beispielsweise beschrieben in der Monographie Gächter-Müller, "Kunststoffadditive", Hanser-Verlag, 2. Ausgabe 1983, Seite 199 ff.

Bevorzugt sind solche stabilisierten Formmassen, die eine oder mehrere Verbindungen der Formel IV, in der R eine Methyl-, Ethyl- oder Isopropylgruppe bedeutet, und/oder Copolymere enthalten, in denen R Methyl-und/oder Ethyl- und/oder Isopropyl- bedeuten kann.

Die stabilisierten Formmassen enthalten in bevorzugter Ausführungsform neben wenigstens einer Zinkverbindung der Formeln I, II oder III, wenigstens ein Polyoxazolin oder Copolyoxazolin der Formel IV und gegebenenfalls Weichmacher, Costabilisatoren, wie Epoxyverbindungen, Phosphite, Polyole oder 1,3-Diketone, sowie übliche Verarbeitungshilfsmittel.

Die erfindungsgemäße Stabilisatorkombination, bestehend aus wenigstens einer Zinkverbindung der Formel I, II oder III und wenigstens einem Polyoxazolin oder Copolyoxazolin der Formel IV, kann auch als Zusatz zu Formmassen verwendet werden, die mit Verbindungen des Zinns, Bleis oder Antimons oder mit Kombinationen aus Cadmium-, Barium-, Calcium- und Zinkverbindungen stabilisiert sind. Durch diesen Zusatz werden die Formmassen in Anfangsfarbe und Langzeitstabilität deutlich verbessert.

Die erfindungsgemäßen stabilisierten Formmassen zeigen unter thermischer Belastung eine hervorragende Anfangsfarbe und Transparenz bei gleichzeitig guter Gesamtstabilitätsdauer. Besonders im Hinblick auf die Anfangsfarbe sind die erfindungsgemäß einzusetzenden Stabilisatorkombinationen herkömmlichen Stabilisatorsystemen auf der Basis von Zink- und Calciumcarboxylaten ebenso wie Stabilisatorsystmen aus Zinkmercaptoestern und Calciumsalzen, wie sie in EP-PS 0 070 092 vom 19.01.83 beschrieben werden, deutlich überlegen (vgl. Tabelle A, Beispiel 6).

Die erfindungsgemäß stabilisierten Formmassen auf der Basis von Polymerisaten des Vinylchlorids enthalten somit als Stabilisatoren eine Kombination aus Carboxylaten, Phenolaten oder Mercaptiden des Zinks und Homo- oder Copolymeren von Aryl- oder Alkyloxazolinen. Es zeigte sich, daß die genannten Polyoxazoline die Langzeitstabilisierung durch Zinkstabilisatoren in nicht vorhersehbarem Maß verstärken, ohne daß hierdurch eine Beeinträchtigung von Anfangsfarbe und Transparenz hervorgerufen wird (vgl. Tabelle A).

Bei den Polymerisaten des Vinylchlorids, welche die Basis der erfindungsgemäßen Formmassen bilden, handelt es sich um Polyvinylchlorid oder Mischpolymerisate des Vinylchlorids, welche durch bekannte Methoden hergestellt werden können, wie sie beispielsweise in der Monographie von Kainer, Polyvinylchlorid und Vinylchlorid-Mischpolymerisate (1965), Springer-Verlag, auf den Seiten 7 bis 59 beschrieben werden (Massen-, Suspensions- oder Emulsionspolymerisation). Die Mischpolymeren können bis zu 30 Gewichtsprozent an Comonomeren wie z. B. Vinylacetat, Vinylidenchlorid, Vinylether, Acrylnitril, Acrylsäureester, Maleinsäure-mono- oder -diester oder Olefine enthalten. Es lassen sich auch Pfropfpolymerisate einsetzen, deren Herstellung z. B. in der o. a. Monographie von Kainer auf den Seiten 111 bis 114 beschrieben wird.

Die Verbindungen der Formeln I, II und III sind bekannt und können nach gängigen Methoden der organischen Synthese hergestellt werden. So lassen sich Verbindungen der Formeln I, II und III aus Zinkoxid oder Zinksalzen, wie z. B. Zinkchlorid, und Carbonsäuren, Thiocarbonsäuren oder Mercaptanen herstellen, wie es z. B. in Houben-Weyl, Methoden der organischen Chemie, Bd. 9 (1955), Seiten 43 bis 45 beschrieben wird.

Die Verbindungen der Formel IV sind ebenfalls bekannt und sind durch Polymerisation und Copolymerisation von 2-Alkyloxazolinen herstellbar. Dieses Verfahren ist z. B. beschrieben in T. Saegusa und S. Kobayashi, Encyclopedia of Polymer Science and Technology, Suppl. Vol. 1, Wiley, New York, 1976, Seite 220.

Den Formeln I, II und III entsprechende Verbindungen können einheitliche oder gemischte Salze des Zinks sein, die sich von Fettsäuren mit 8 bis 36, vorzugsweise 8 bis 22 Kohlenstoffatomen und von Mercaptanen mit 1 bis 36, vorzugsweise 6 bis 24 Kohlenstoffatomen, die gegebenenfalls eine oder mehrere Atomgruppierungen

$$-\overset{\overset{\displaystyle O}{\|}}{C}-O-$$

enthalten, ableiten. Insbesondere kommen als Fettsäuren in Frage: Caprinsäure, Caprylsäure, Laurinsäure, Myristinsäure, Palmitinsäure, Stearinsäure und Behensäure. Ebenfalls verwendbar sind Salze von verzweigten Fettsäuren wie 2-Ethylhexansäure, 2-Octyldecansäure oder auch Hydroxyfettsäuren wie 9(10)-Hydroxystearinsäure oder 9,10-Dihydroxystearinsäure. Die Zinkseife kann aus dem Salz einer einzelnen Fettsäure

oder auch aus den Salzen von Fettsäuregemischen, wie sie aus natürlichen Fetten gewonnen werden, bestehen. Als Salze aromatischer Carbonsäuren kommen besonders die Zinksalze der Benzoesäure und der substituierten Benzoesäuren, insbesondere der alkylsubstituierten Benzoesäuren, in Betracht. Als Phenolate können z. B. verwendet werden: Methylphenolate, t-Butylphenolate, Nonylphenolate, Dodecylphenolate oder Naphthenate des Zinks. Als Mercaptide kommen in Betracht z. B. die Zinksalze von Hexylmercaptan, Octylmercaptan, Nonylmercaptan, Decylmercaptan, Dodecylmercaptan, Palmitylmercaptan, Stearylmercaptan und Behenylmercaptan, oder auch von verzweigten Mercaptanen wie 2-Ethylhexylmercaptan, 2-Ethylnonylmercaptan, 2-Octyldecylmercaptan oder 1,1-Dimethyldecylmercaptan. Ebenfalls verwendet werden können Zinksalze aromatischer Mercaptane wie z. B. Thiophenol, t-Butyl-thio-phenol, Nonylthiophenol, Dodecyl-thiophenol oder Thionaphthol. In bevorzugter Form werden verwendet die Zinksalze von carboxylgruppenhaltigen Mercaptanen wie die Butylester, Hexylester, Octylester, 2-Ethylhexylester, 2-Ethylnonylester, Palmitylester oder Stearylester der Thioglykolsäure, 2-Mercaptopropionsäure, 3-Mercaptopropionsäure oder der Thiosalicylsäure. Zinkmercaptide von Mercaptanen mit mehreren Carboxylgruppen, wie beispielsweise den oben genannten Estern der 2-Mercaptobernsteinsäure, kommen ebenfalls in Betracht.

Als Chelatbildner werden Verbindungen der Formel IV (Polyoxazoline) eingesetzt. Verbindungen der Formel IV sind beispielsweise Polymethyloxazolin, Polyethyloxazolin, Poly-n-propyloxazolin, Polyisopropyloxazolin, Polyundecyloxazolin oder Polyphenyloxazolin. Ebenfalls einsetzbar sind Copolymere aus zwei verschiedenen Alkyl- bzw. Aryl-Oxazolinen mit einem jeweiligen Anteil zwischen 5 % und 95 %. Auch Terpolymere aus drei unterschiedlichen Oxazolinen mit einem Anteil von jeweils 5 % bis 95 % sind verwendbar.

In der Regel enthalten die stabilisierten Formmassen auf 100 Teile Polymerisat 0,02 bis 2, vorzugsweise 0,05 bis 1,0 Gewichtsteile Verbindungen der Formel I und/oder II und/oder III. Diese Verbindungen werden kombiniert mit 0,02 bis 2, vorzugsweise 0,05 bis 1,0 Gewichtsteilen Verbindungen der Formel IV.

Die Herstellung der erfindungsgemäßen stabilisierten Formmassen kann durch übliche Methoden, z. B. durch einfaches mechanisches Vermischen der Komponenten in konventionellen Mischern erfolgen. Bei diesem Mischvorgang können weitere übliche Verarbeitungshilfsmittel eingearbeitet werden, wie z. B. Gleitmittel (Montanwachse oder Polyolpartialester oder Fettsäureamide), Weichmacher, Füllstoffe, Lichtstabilisatoren oder weitere Costabilisatoren, wie z. B. epoxidierte Fettsäureester, Polyole, Phosphite, 1,3-Diketone oder Dihydropyridindicarbonsäureester. Die homogene Verteilung der Stabilisatoren im PVC kann z. B. mit Hilfe eines Zweiwalzenmischers bei 150 bis 200 °C erfolgen. Zur weiteren Erläuterung der Erfindung und zum Nachweis des überraschenden technischen Fortschritts dienen die im folgenden beschriebenen Beispiele:

Herstellung und Prüfung der Walzfelle

Die Wirkung der Stabilisatorkombinationen wurde durch Bestimmung der statischen Thermostabilität von Walzfellen geprüft. Hierzu wurden die Stabilisatorkombinationen und gegebenenfalls Weichmacher und Verarbeitungshilfsmittel mit Polyvinylchlorid 1 Minute lang in einer Labormühle gemischt und anschließend auf einem Doppelwalzwerk bei einer Walzentemperatur von 170 °C im Gleichlauf im Verlauf von 5 Minuten zu 1 mm starken Walzfellen verarbeitet. Aus den Walzfellen wurden Streifen der Dimension 10 × 250 mm geschnitten, die anschließend in einem ThermotestOfen (Metrastat Typ Sigma) gemäß DIN 53 381 bei 180 °C thermisch belastet wurden. Die Probestreifen werden dabei kontinuierlich aus der Heizzone ausgefahren und zeigen durch die Farbveränderung die Wirkung der Stabilisatoren.

Als Stabilisatorkomponenten wurden eingesetzt:

1. Zinkstearat
2. Zinkoctoat
3. Zink-bis-(2-ethylhexylthioglykolat)
4. POX I: Copolymer aus 30 Mol-% Methyl- und 70 Mol-% Isopropyloxazolin
5. POX II: Polyethyloxazolin
6. Calciumstearat
7. TNPP : Tris(nonylphenyl)phosphit
8. ESO : Epoxidiertes Sojabohnenöl
9. Benzoylstearoylmethan
10. Trimethylolpropan

Aus folgenden Bestandteilen wurde eine Mischung A zusammengestellt (GT - Gewichtsteile):

- 100 GT Suspensions-Polyvinylchlorid (K-Wert 70; VESTOLIT® S 7054; Hüls AG, Marl)
- 30 GT Dioctylphthalat (VESTINOL® AH; Hüls AG, Marl)

- 0,3 GT Montanwachs

Zur Herstellung der Polyvinylchlorid-Formmassen 1 bis 8 wurde die Mischung A mit der angegebenen Zusammensetzung mit den Stabilisatoren der Tabelle A versetzt. Die Mischungen wurden in der angegebenen Weise zur Probestreifen verarbeitet und im Thermotest geprüft. Der jeweils entsprechende Verlauf der Verfärbung der Probestreifen während der thermischen Belastung ist abgeschätzt entsprechend der folgenden Skala:

```
0        1  2  3     4     5      6  7  8  9     10
farblos ———————→ gelb ——→ orange ——→ schwarz
```

Tabelle A:

| Beispiel-Nr.: | Stabilisatoren | GT | Belastung bei 180 °C in Minuten | | | | | |
|---|---|---|---|---|---|---|---|---|
| | | | 0 | 10 | 20 | 30 | 40 | 50 |
| | | | Farbe | | | | | |
| 1 z.Vgl. | Zinkstearat | 0,2 | 0 | 10 | 10 | 10 | 10 | 10 |
| 2 z.Vgl. | Zinkstearat<br>Calciumstearat | 0,5<br>1,0 | 2 | 3 | 3 | 7 | 10 | 10 |
| 3 erf.gem. | Zinkstearat<br>POX I | 0,2<br>0,2 | 0 | 0 | 3 | 7 | 7 | 7 |
| 4 erf.gem. | Zinkstearat<br>POX I<br>TNPP | 0,2<br>0,2<br>0,1 | 0 | 0 | 0 | 3 | 7 | 7 |
| 5 z.Vgl. | Zink-bis(2-ethyl-hexylthioglykolat) | 0,2 | 0 | 0 | 10 | 10 | 10 | 10 |
| 6 z.Vgl. | Zink-bis(2-ethyl-hexylthioglykolat)<br>Calciumstearat | 0,3<br>0,5 | 1 | 1 | 1 | 2 | 5 | 10 |
| 7 erf.gem. | Zink-bis(2-ethyl-hexylthioglykolat)<br>POX I | 0,2<br>0,2 | 0 | 0 | 0 | 0 | 5 | 7 |
| 8 erf.gem. | Zink-bis(2-ethyl-hexylthioglykolat)<br>POX I | 0,6<br>0,6 | 0 | 0 | 0 | 1 | 3 | 3 |

Aus folgenden Bestandteilen wurde eine Mischung B zusammengestellt:

- 100 GT Suspensions-Polyvinylchlorid (K-Wert 70; VESTOLIT[R] S 7054; Hüls AG, Marl)
- 1,0 GT Stearinsäure

Zur Herstellung der Polyvinylchlorid-Formmassen 9 bis 11 wurde die Mischung B der angegebenen Zusammensetzung mit den Stabilisatoren der Tabelle B versetzt und in der angegebenen Weise zu Probestreifen verarbeitet.

Tabelle B:

| Beispiel-Nr.: | Stabilisatoren | GT | Belastung bei 180 °C in Minuten | | | | | |
|---|---|---|---|---|---|---|---|---|
| | | | 0 | 10 | 20 | 30 | 40 | 50 |
| | | | Farbe | | | | | |
| 9 z.Vgl. | Zinkstearat<br>Calciumstearat | 0,5<br>1,0 | 6 | 6 | 6 | 6 | 6 | 10 |
| 10 erf.gem. | Zinkstearat<br>POX I | 0,2<br>0,2 | 2 | 2 | 2 | 8 | 9 | 10 |
| 11 erf.gem. | Zink-bis(2-ethylhexylthioglykolat)<br>POX I | 0,1<br>0,1 | 0 | 0 | 0 | 1 | 2 | 3 |

Aus folgenden Bestandteilen wurde eine Mischung C zusammengestellt:

- 100 GT Suspensions-Polyvinylchlorid (K-Wert 60; VESTOLIT[R] S 6058; Hüls AG, Marl)
- 1,0 GT Stearinsaure

Zur Herstellung der Polyvinylchlorid-Formmassen 12 bis 18 wurde die Mischung C mit der angegebenen Zusammensetzung mit den Stabilisatoren der Tabelle C versetzt und in der angegebenen Weise zu Probestreifen verarbeitet.

Tabelle C:

| Beispiel-Nr.: | Stabilisatoren | GT | Belastung bei 180 °C in Minuten | | | | | | |
|---|---|---|---|---|---|---|---|---|---|
| | | | 0 | 10 | 20 | 30 | 40 | 50 | 60 |
| | | | Farbe | | | | | | |
| 12 | Zink-bis(2-ethylhexylthioglykolat)<br>POX I | 0,2<br>0,1 | 0 | 0 | 0 | 0 | 10 | 10 | 10 |
| 13 | Zink-bis(2-ethylhexylthioglykolat)<br>POX I<br>ESO | 0,1<br>0,1<br>3,0 | 1 | 1 | 1 | 2 | 3 | 4 | 10 |
| 14 | Zink-bis(2-ethylhexylthioglykolat)<br>POX I | 0,1<br>0,1 | 1 | 1 | 1 | 1 | 4 | 4 | 5 |
| 15 | Zink-bis(2-ethylhexylthioglykolat)<br>POX I<br>ESO | 0,1<br>0,1<br>5,0 | 0 | 0 | 0 | 0 | 0 | 1 | 3 |
| 16 | Zink-bis(2-ethylhexylthioglykolat)<br>POX I<br>Calciumstearat | 0,5<br>0,3<br>0,3 | 1 | 1 | 1 | 1 | 3 | 3 | 10 |
| 17 | Zinkstearat<br>POX I | 0,2<br>0,2 | 1 | 1 | 2 | 2 | 2 | 7 | 8 |
| 18 | Zinkstearat<br>POX I<br>ESO | 0,2<br>0,2<br>3,0 | 1 | 1 | 1 | 1 | 1 | 3 | 3 |

Zur Herstellung der Polyvinylchlorid-Formmassen 19 bis 25 wurden 100 GT Masse-PVC (K-Wert 58; VESTOLITR M 5867; Hüls AG, Marl) mit den Stabilisatoren der Tabelle D versetzt und in der angegebenen Weise zu Probestreifen verarbeitet.

Tabelle D:

| Beispiel-Nr.: | Stabilisatoren | GT | Belastung bei 180 °C in Minuten | | | | | | |
|---|---|---|---|---|---|---|---|---|---|
| | | | 0 | 10 | 20 | 30 | 40 | 50 | 60 |
| | | | Farbe | | | | | | |
| 19 z.Vgl. | Zinkoctoat | 0,075 | | | | | | | |
| | Calciumbehenat | 0,35 | 3 | 3 | 3 | 3 | 4 | 4 | 4 |
| | ESO | 5,0 | | | | | | | |
| 20 erf.gem. | Zinkoctoat | 0,074 | | | | | | | |
| | POX II | 0,1 | 1 | 1 | 1 | 1 | 1 | 4 | 4 |
| | ESO | 5,0 | | | | | | | |
| 21 erf.gem. | Zinkstearat | 0,1 | | | | | | | |
| | POX II | 0,04 | 1 | 1 | 1 | 1 | 1 | 1 | 4 |
| | ESO | 5,0 | | | | | | | |
| 22 erf.gem. | Zinkstearat | 0,1 | | | | | | | |
| | POX II | 0,04 | 0 | 0 | 0 | 0 | 2 | 3 | 4 |
| | ESO | 5,0 | | | | | | | |
| | Benzoylstearoylmethan | 0,1 | | | | | | | |
| 23 erf.gem. | Zinkstearat | 0,1 | | | | | | | |
| | POX II | 0,04 | 0 | 0 | 0 | 0 | 1 | 3 | 4 |
| | ESO | 5,0 | | | | | | | |
| | Trimethylolpropan | 0,2 | | | | | | | |
| 24 z.Vgl. | Zinkstearat | 0,2 | 3 | 3 | 3 | 10 | 10 | 10 | 10 |
| | Calciumstearat | 0,4 | | | | | | | |
| 25 erf.gem. | Zinkstearat | 0,2 | 1 | 1 | 1 | 1 | 7 | 10 | 10 |
| | POX II | 0,2 | | | | | | | |

Aus folgenden Bestandteilen wurde eine Mischung E zusammengestellt:
- 100 GT Suspensions-Polyvinylchlorid (K-Wert 70; VESTOLIT$^R$ S 7054; Hüls AG, Marl)
- 30 GT Dioctylphthalat (VESTINOL$^R$ AH; Hüls AG, Marl)
- 0,3 GT Zinkstearat
- 0,6 GT Bariumstearat

Zur Herstellung der Polyvinylchlorid-Formmassen 26 bis 29 wurde die Mischung E mit der angegebenen Zusammensetzung mit den Stabilisatoren der Tabelle E versetzt und in der angegebenen Weise zu Probestreifen verarbeitet.

Tabelle E:

| Beispiel-Nr.: | Stabilisatoren | GT | Belastung bei 180 °C in Minuten | | | | | | |
|---|---|---|---|---|---|---|---|---|---|
| | | | 0 | 10 | 20 | 30 | 40 | 50 | 60 |
| | | | Farbe | | | | | | |
| 26 z.Vgl. | - | | 3 | 3 | 3 | 2 | 2 | 8 | 10 |
| 27 z.Vgl. | Zinkstearat | 0,1 | 1 | 1 | 1 | 1 | 1 | 10 | 10 |
| 28 erf.gem. | Zinkstearat<br>POX II | 0,1<br>0,07 | 1 | 1 | 1 | 1 | 1 | 4 | 10 |
| 29 erf.gem. | Zinkstearat<br>POX II | 0,2<br>0,2 | 1 | 1 | 1 | 1 | 1 | 3 | 7 |

**Patentansprüche**

1. Stabilisierte Formmassen auf der Basis von Polyvinylchlorid oder Vinylchlorid-Copolymerisaten, enthaltend ein Stabilisatorsystem aus wenigstens einer Zinkverbindung und wenigstens einem Costabilisator, gekennzeichnet durch
einen Gehalt an einer oder mehreren Verbindungen des Zinks der Formel

I $R^1O - Zn - OR^2$,

in der $R^1$ und $R^2$ gleich oder verschieden sein können und für geradkettige oder verzweigte, gegebenenfalls mit Hydroxylgruppen substituierte, aliphatische Acylgruppen mit 8 bis 36 C-Atomen oder für gegebenenfalls mit Alkylgruppen von 1 bis 22 C-Atomen substituierte aromatische Acylgruppen oder für gegebenenfalls mit Alkylgruppen von 1 bis 22 C-Atomen substituierte Arylgruppen stehen, oder einer oder mehreren Verbindungen des Zinks der Formel

II $R^3S - Zn - SR^4$,

in der $R^3$ und $R^4$ gleich oder verschieden sein können und für geradkettige oder verzweigte Alkylgruppen mit 6 bis 22 C-Atomen oder für gegebenenfalls mit Alkylgruppen von 1 bis 22 C-Atomen substituierte Arylgruppen oder für eine Gruppierung -X-CO-O-Y stehen, in der X eine Alkylengruppe $(CH_2)_m$ mit m = 1 bis 20, eine Phenylengruppe oder eine Alkylidengruppe -CHZ- bedeutet, in der Z eine geradkettige oder verzweigte Alkylgruppe mit 1 bis 22 C-Atomen oder eine Gruppierung $-CH_2-CO-O-Y$ darstellt, und Y für eine geradkettige oder verzweigte Alkylgruppe mit 6 bis 22 C-Atomen steht, und/oder einer oder mehreren Verbindungen des Zinks der Formel

III $R^5O - Zn - SR^6$,

in der $R^5$ definiert ist wie $R^1$ bzw. $R^2$ in der Formel I und $R^6$ definiert ist wie $R^3$ bzw. $R^4$ in der Formel

II, und einer oder mehreren Polyoxazolinen der Formel

IV 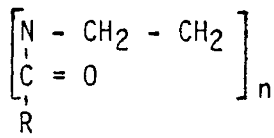

in der R, gegebenenfalls unterschiedliche, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 10 000 steht.

**2.** Stabilisierte Formmassen nach Anspruch 1,
dadurch gekennzeichnet,
daß sie die Verbindungen der Formel I und/oder II und/oder III in Mengen von 0,02 bis 2,0 Gewichtsprozent, bezogen auf Polymere, enthalten.

**3.** Stabilisierte Formmassen nach Anspruch 1 und 2,
dadurch gekennzeichnet,
daß sie die Verbindungen der Formel IV in Mengen von 0,02 bis 2,0 Gewichtsprozent, bezogen auf Polymere, enthalten.

**4.** Stabilisierte Formmassen nach den Ansprüchen 1 bis 3,
dadurch gekennzeichnet,
daß sie die Verbindungen der Formel I und/oder II und/oder III und die Verbindungen der Formel IV als Zusatz zu Primärstabilisatoren in Form von Verbindungen des Zinns, Bleis oder Antimons oder in Form von Kombinationen aus Cadmium-, Barium-, Calcium- und Zinkverbindungen enthalten.

**5.** Stabilisatorsystem zur Stabiliserung von Formmassen auf der Basis von Polyvinylchlorid oder Vinylchlorid-Copolymerisaten, bestehend aus wenigstens einer Zinkverbindung und wenigstens einem Costabilisator,
gekennzeichnet durch
einen Gehalt an einer oder mehreren Verbindungen des Zinks der Formel

I $R^1O - Zn - OR^2$,

in der $R^1$ und $R^2$ gleich oder verschieden sein können und für geradkettige oder verzweigte, gegebenenfalls mit Hydroxylgruppen substituierte, aliphatische Acylgruppen mit 8 bis 36 C-Atomen oder für gegebenenfalls mit Alkylgruppen von 1 bis 22 C-Atomen substituierte aromatische Acylgruppen oder für gegebenenfalls mit Alkylgruppen von 1 bis 22 C-Atomen substituierte Arylgruppen stehen, oder einer oder mehreren Verbindungen des Zinks der Formel

II $R^3S - Zn - SR^4$,

in der $R^3$ und $R^4$ gleich oder verschieden sein können und für geradkettige oder verzweigte Alkylgruppen mit 6 bis 22 C-Atomen oder für gegebenenfalls mit Alkylgruppen von 1 bis 22 C-Atomen substituierte Arylgruppen oder für eine Gruppierung -X-CO-O-Y stehen, in der X eine Alkylengruppe $(CH_2)_m$ mit m = 1 bis 20, eine Phenylengruppe oder eine Alkylidengruppe -CHZ- bedeutet, in der Z eine geradkettige oder verzweigte Alkylgruppe mit 1 bis 22 C-Atomen oder eine Gruppierung $-CH_2$ - CO-O-Y darstellt, und Y für eine geradkettige oder verzweigte Alkylgruppe mit 6 bis 22 C-Atomen steht, und/oder einer oder mehreren Verbindungen des Zinks der Formel

III $R^5O - Zn - SR^6$,

in der $R^5$ definiert ist wie $R^1$ bzw. $R^2$ in der Formel I und $R^6$ definiert ist wie $R^3$ bzw. $R^4$ in der Formel II,
und einer oder mehreren Polyoxazlinen der Formel

IV 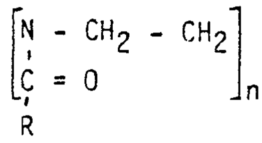

in der R, gegebenenfalls unterschiedliche, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 10 000 steht.

**6.** Stabilisatorsystem nach Anspruch 5,
dadurch gekennzeichnet,
daß es Zinkverbindung(en) und Polyoxazolin(e) im Gewichtsverhältnis 1 : 10 bis 10 : 1, vorzugsweise 1 : 5 bis 5 : 1 enthält.

## Claims

**1.** A stabilised moulding composition based on polyvinyl chloride or a vinyl chloride copolymer and containing a stabiliser system composed of at least one zinc compound and at least one costabiliser, characterised in that it contains one or more zinc compounds of the formula

I $R^1O\text{-}Zn\text{-}OR^2$

in which $R^1$ and $R^2$ may be identical or different and represent straight-chain or branched, aliphatic acyl groups having 8 to 36 carbon atoms which are unsubstituted or substituted by hydroxyl groups, or represent aromatic acyl groups which are unsubstituted or substituted by alkyl groups having 1 to 22 carbon atoms, or represent aryl groups which are unsubstituted or substituted by alkyl groups having 1 to 22 carbon atoms, or contains one or more zinc compounds of the formula

II $R^3S\text{-}Zn\text{-}SR^4$

in which $R^3$ and $R^4$ may be identical or different and represent straight-chain or branched alkyl groups having 6 to 22 carbon atoms or represent aryl groups which are unsubstituted or substituted by alkyl groups having 1 to 22 carbon atoms or represent a -X-CO-O-Y group in which X is an alkylene group $(CH_2)_m$ where m = 1 to 20, a phenylene group or an alkylidene group -CHZ- in which Z is a straight-chain or branched alkyl group having 1 to 22 carbon atoms or a $-CH_2\text{-}CO\text{-}O\text{-}Y$ group, and Y is a straight-chain or branched alkyl group having 6 to 22 carbon atoms, and/or contains one or more zinc compounds of the formula

III $R^5O\text{-}Zn\text{-}SR^6$

in which $R^5$ is as defined for $R^1$ and $R^2$ in the formula I, and $R^6$ is as defined for $R^3$ and $R^4$ in the formula II, and one or more polyoxazolines of the formula

IV 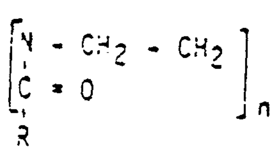

in which the R radicals are (if desired different) straight-chain or branched alkyl radicals having 1 to 22 carbon atoms or substituted or unsubstituted cycloalkyl or aryl radicals, preferably alkyl radicals having 1 to 12 carbon atoms, and n is an integer from 10 to 10,000.

**2.** A stabilised moulding composition according to claim 1, characterised in that it contains the compounds of the formula I and/or II and/or III in an amount of from 0.02 to 2.0 per cent by weight, based

on the polymer.

3. A stabilised moulding composition according to claim 1 or 2, characterised in that it contains the compound(s) of the formula IV in an amount of from 0.02 to 2.0 per cent by weight, based on the polymer.

4. A stabilised moulding composition according to any of claims 1 to 3, characterised in that it contains the compounds of the formula I and/or II and/or III and the compound(s) of the formula IV as an addition to primary stabilisers in the form of compounds of tin, lead or antimony or in the form of a combination of compounds of cadmium, barium, calcium and zinc.

5. A stabiliser system for stabilising a moulding composition based on polyvinyl chloride or a vinyl chloride copolymer, composed of at least one zinc compound and at least one costabiliser, characterised in that it contains one or more zinc compounds of the formula

I $R^1O\text{-}Zn\text{-}OR^2$

in which $R^1$ and $R^2$ may be identical or different and represent straight-chain or branched, aliphatic acyl groups having 8 to 36 carbon atoms which are unsubstituted or substituted by hydroxyl groups, or represent aromatic acyl groups which are unsubstituted or substituted by alkyl groups having 1 to 22 carbon atoms, or represent aryl groups which are unsubstituted or substituted by alkyl groups having 1 to 22 carbon atoms, or contains one or more zinc compounds of the formula

II $R^3S\text{-}Zn\text{-}SR^4$

in which $R^3$ and $R^4$ may be identical or different and represent straight-chain or branched alkyl groups having 6 to 22 carbon atoms or represent aryl groups which are unsubstituted or substituted by alkyl groups having 1 to 22 carbon atoms or represent a -X-CO-O-Y group in which X is an alkylene group $(CH_2)_m$ where m = 1 to 20, a phenylene group or an alkylidene group -CHZ- in which Z is a straight-chain or branched alkyl group having 1 to 22 carbon atoms or a $-CH_2\text{-}CO\text{-}O\text{-}Y$ group, and Y is a straight-chain or branched alkyl group having 6 to 22 carbon atoms, and/or contains one or more zinc compounds of the formula

III $R^5O\text{-}Zn\text{-}SR^6$

in which $R^3$ is as defined for $R^1$ and $R^2$ in the formula I, and $R^6$ is as defined for $R^3$ and $R^4$ in the formula II, and one or more polyoxazolines of the formula

IV 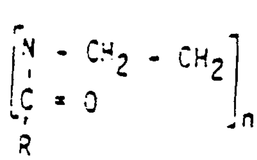

in which the R radicals are (if desired different) straight-chain or branched alkyl radicals having 1 to 22 carbon atoms or substituted or unsubstituted cycloalkyl or aryl radicals, preferably alkyl radicals having 1 to 12 carbon atoms, and n is an integer from 10 to 10,000.

6. A stabiliser system according to claim 5, characterised in that it contains zinc compound(s) and polyoxazoline(s) in a weight ratio of from 1:10 to 10:1, preferably from 1:5 to 5:1.

**Revendications**

1. Masses à mouler stabilisées, à base de chlorure de polyvinyle ou de copolymères du chlorure de vinyle, renfermant un système stabilisant obtenu à partir d'au moins un composé de zinc et d'au moins un co-stabilisant,
caractérisées par une teneur en un ou plusieurs composés du zinc de formule

$R^1O - Zn - OR^2$ (I),

dans laquelle $R^1$ et $R^2$ peuvent être identiques ou différents et représentent des groupes acyle aliphatiques à chaîne droite ou ramifiés, éventuellement substitués par des groupes hydroxyle et comportant de 8 à 36 atomes de carbone, ou bien des groupes acyle aromatiques éventuellement substitués par des groupes alkyle comportant de 1 à 22 atomes de carbone ou des groupes aryle éventuellement substitués par des groupes alkyle comportant de 1 à 22 atomes de carbone, ou d'un ou plusieurs composés du zinc de formule

$R^3S - Zn - SR^4$ (II),

dans laquelle $R^3$ et $R^4$ peuvent être identiques ou différents et représentent des groupes alkyle à chaîne linéaire ou ramifiés comportant de 6 à 22 atomes de carbone, ou représentent des groupes aryle éventuellement substitués par des groupes alkyle comportant de 1 à 22 atomes de carbone ou représentent un groupement -X-CO-O-Y, dans lequel X représente un groupe alkylène $(CH_2)m$, où $\underline{m}$ a une valeur de 1 à 20, un groupe phénylène ou un groupe alkylidène -CHZ-, où Z représente un groupe alkyle à chaîne droite ou ramifié comportant de 1 à 22 atomes de carbone, ou un groupement $-CH_2-CO-O-Y$, et Y est un groupe alkyle à chaîne droite ou ramifiée comportant de 6 à 22 atomes de carbone, et/ou d'un ou plusieurs composés du zinc de formule

$R^5O - Zn - SR^6$ (III),

dans laquelle $R^5$ est défini comme $R^1$ et $R^2$ dans la formule (I) et $R^6$ est défini comme $R^3$ et $R^4$ dans la formule (II), et de l'une ou plusieurs des poly-oxazolines de formule

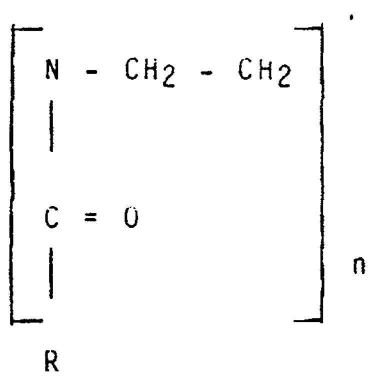

(IV),

dans laquelle R représente des radicaux alkyle éventuellement différents, à chaîne droite ou ramifiés et comportant de 1 à 22 atomes de carbone, ou bien des radicaux cycloalkyle ou aryle éventuellement substitués, de préférence des radicaux alkyle comportant de 1 à 12 atomes de carbone, tandis que $\underline{n}$ représente des nombres entiers d'une valeur de 10 à 10 000.

2. Masses à mouler stabilisées selon la revendication 1,
caractérisées par le fait qu'elle renferment les composés des formules (I) et/ou (II) et/ou (III) dans des quantités de 0,02 à 2,0 % en poids, relativement au polymère.

3. Masses à mouler stabilisées selon les revendications 1 et 2,
caractérisées par le fait qu'elles renferment les composés de la formule (IV) dans des quantités de 0,02 à 2,0 % en poids, relativement au polymère.

4. Masses à mouler stabilisées selon les revendications 1 à 3,
caractérisées par le fait qu'elles renferment les composés des formules (I) et/ou (II) et/ou (III) et les composés de la formule (IV) en tant qu'additif à des stabilisants primaires sous forme de composés de l'étain, du plomb ou de l'antimoine, ou sous forme de combinaisons à base de composés du cadmium, du baryum, du calcium et du zinc.

5. Système stabilisant pour stabiliser des masses à base de chlorure de polyvinyle ou de copolymères du chlorure de vinyle, constitué par au moins un composé du zinc et par au moins un co-stabilisant, caractérisé par une teneur en un ou plusieurs composés du zinc de formule

$R^1O - Zn - OR^2$ (I),

dans laquelle $R^1$ et $R^2$ peuvent être identiques ou différents et représentent des groupes acyle aliphatiques à chaîne droite ou ramifiés, éventuellement substitués par des groupes hydroxyle et comportant de 8 à 36 atomes de carbone, ou bien des groupes acyle aromatiques éventuellement substitués par des groupes alkyle comportant de 1 à 22 atomes de carbone, ou des groupes aryle éventuellement substitués par des groupes alkyle comportant de 1 à 22 atomes de carbone, ou d'un ou plusieurs composés du zinc de formule

$R^3S - Zn - SR^4$ (II),

dans laquelle $R^3$ et $R^4$ peuvent être identiques ou différents et représentent des groupes alkyle à chaîne linéaire ou ramifiés comportant de 6 à 22 atomes de carbone, ou représentent des groupes aryle éventuellement substitués par des groupes alkyle comportant de 1 à 22 atomes de carbone, ou représentent un groupement -X-CO-O-Y dans lequel X représente un groupe alkylène $(CH_2)_m$ où m a une valeur de 1 à 20, un groupe phénylène ou un groupe alkylidène -CHZ-, où Z représente un groupe alkyle à chaîne droite ou ramifié comportant de 1 à 22 atomes de carbone ou un groupement $-CH_2-CO-O-Y$, et Y est un groupe alkyle à chaîne droite ou ramifiée comportant de 6 à 22 atomes de carbone, et/ou d'un ou plusieurs composés du zinc de formule

$R^5O - Zn - SR^6$ (III),

dans laquelle $R^5$ est défini comme $R^1$ et $R^2$ dans la formule (I) et $R^6$ est défini comme $R^3$ et $R^4$ dans la formule (II), et de l'une ou plusieurs poly-oxazolines de formule

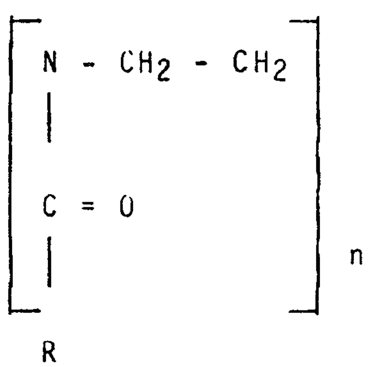

(IV),

dans laquelle R représente des radicaux alkyle éventuellement différents, à chaîne droite ou ramifiés et comportant de 1 à 22 atomes de carbone, ou bien des radicaux cycloalkyle ou aryle éventuellement substitués, de préférence des radicaux alkyle comportant de 1 à 12 atomes de carbone, tandis que n représente des nombres entiers d'une valeur de 10 à 10 000.

6. Système stabilisant selon la revendication 5, caractérisé par le fait qu'il renferme le(s) composé(s) du zinc et la ou les poly-oxazoline(s) dans une proportion pondérale de 1 : 10 à 10 : 1, de préférence de 1 : 5 à 5 : 1.